# EUROPÄISCHE PATENTSCHRIFT

(11) **EP 1 591 813 B1**
(45) Veröffentlichungstag und Bekanntmachung des Hinweises auf die Patenterteilung: **25.04.2007**
(21) Anmeldenummer: 04090085.4
(22) Anmeldetag: 04.03.2004
(51) Int. Cl.: G02B 6/42

(54) **Verfahren zur Ausrichtung eines Lichtwellenleiters in Bezug auf eine optische Einheit eines optischen Moduls, optisches Modul und Bausatz mit einem optischen Modul**
Method of aligning an optical waveguide to an optical unit including an optical module, optical module and a construction kit including an optical module
Méthode d'alignement d'un guide d'onde optique avec une unitée optique comprenant un module optique, module optique et jeu de construction comprenant un module optique

(43) Veröffentlichungstag der Anmeldung: 02.11.2005
(73) Patentinhaber: Infineon Technologies AG, 81669 München (DE)
(72) Erfinder: Hurt, Hans, 93049 Regensburg (DE)
(74) Vertreter: Müller, Wolfram Hubertus

(56) Entgegenhaltungen:
- WO-A-03/016969
- CH-A- 630 468
- DE-A- 2 358 785
- US-A1- 2002 131 728

## Beschreibung

Bezeichnung der Erfindung: Verfahren zur Ausrichtung eines Lichtwellenleiters in Bezug auf eine optische Einheit eines optischen Moduls, Anordnung mit einem optischen Modul und Bausatz mit einem optischen Modul.

Die Erfindung betrifft ein Verfahren zur Ausrichtung eines Lichtwellenleiters in Bezug auf eine optische Einheit eines optischen Moduls gemäß dem Oberbegriff des Anspruchs 1, eine Anordnung mit einem optischen Modul gemäß dem Oberbegriff des Anspruchs 5 und einen Bausatz mit einem solchen optischen Modul und einer Mehrzahl von Koppelelementen.

Es stellt sich allgemein das Problem, eine optische Einheit wie einen vertikal emittierenden Laser oder eine Fotodiode mit einem Lichtwellenleiter in effektiver Weise zu koppeln. Hierzu ist es bekannt, eine aktive Justage des Lichtwellenleiters in Bezug auf die optische Einheit durchzuführen. Hierzu wird der Lichtwellenleiter während des Betriebs der optischen Einheit auf eine maximale ein- oder ausgekoppelte Leistung ausgerichtet und in dieser Position fixiert. Dieser aktive Justagevorgang ist jedoch sehr zeit- und kostenintensiv und dementsprechend für einen Hochvolumeneinsatz nicht geeignet.

Aus der DE 23 58 785 A1 ist eine Koppelvorrichtung zur Ausrichtung eines Lichtwellenleiters in Bezug auf ein optisches Bauelement bekannt, bei der der anzukoppelnde Lichtwellenleiter in einem Steckerexzenter befestigt ist, der drehbar in einem Steckerteil angeordnet ist. Das Steckerteil ist wiederum drehbar innerhalb einer Exzenterführung angeordnet, wobei das Ausrichten des Lichtwellenleiters durch Drehen des Steckerteils und des zu diesem exzentrisch angebrachten Steckerexzenters erfolgt.

Aus der DE 199 09 242 A1 ist ein opto-elektronisches Modul bekannt, bei dem ein Leadframe mit einem opto-elektronischen Wandler in einem Modulgehäuse positioniert und mit einem lichtdurchlässigen, formbaren Material vergossen wird. Eine Lichtein- oder Auskopplung erfolgt über eine Lichtleitfaser, die an einem Stutzen des Modulgehäuses angekoppelt wird. Auf dem Leadframe befindet sich auch der Treiberbaustein bzw. Empfangsbaustein für den opto-elektronischen Wandler.

Die US-B2-6 470 120 beschreibt ein Verfahren und eine Vorrichtung, bei denen sowohl eine optische Komponente als auch ein zugeordneter Lichtwellenleiter jeweils auf einer inneren Hülse angeordnet sind, die in Bezug auf eine in einem äußeren Rahmen fest angeordneten äußere Hülse exzentrisch ausgebildet ist. Die innere Hülse ist dabei jeweils drehbar in einer entsprechenden Bohrung der äußeren Hülse angeordnet. Weiter sind die optische Komponente und der Lichtwellenleiter jeweils exzentrisch in der inneren Hülse angeordnet. Durch Drehen der äußeren und/oder inneren Hülse ist jeweils die Position der optischen Komponente und des Lichtwellenleiters einstellbar und diese können durch geeignetes Drehen der jeweiligen inneren und äußeren Hülsen zueinander positioniert werden.

Der vorliegenden Erfindung liegt die Aufgabe zugrunde, eine Anordnung mit einem optischen Modul, einen Bausatz und ein Verfahren zur Verfügung zu stellen, die in einfacher und kostengünstiger Weise ohne die Notwendigkeit einer aktiven Justage die Ausrichtung eines Lichtwellenleiters in Bezug auf eine optische Einheit ermöglichen.

Diese Aufgabe wird erfindungsgemäß durch ein Verfahren mit den Merkmalen des Anspruchs 1, eine Anordnung mit den Merkmalen des Anspruchs 5 und einen Bausatz mit den Merkmalen des Anspruchs 13 gelöst. Bevorzugte und vorteilhafte Ausgestaltungen der Erfindung sind in den Unteransprüchen angegeben.

Danach weist das optische Modul eine Referenzgeometrie auf, die eine erste Symmetrieachse definiert. Zunächst wird ein Versatz zwischen der optischen Achse der optischen Einheit und der Symmetrieachse der Referenzgeometrie bestimmt. Es wird weiter ein Koppelelement bereitgestellt, das der Aufnahme eines in Bezug auf die optische Einheit auszurichtenden Lichtwellenleiters dient und das hierzu eine durch eine Innenfläche begrenzte Bohrung aufweist, wobei die Innenfläche eine zweite Symmetrieachse definiert. Das Koppelelementes wird in Bezug auf das optische Modul derart angeordnet, dass die zweite Symmetrieachse mit der optischen Achse der optischen Einheit zusammenfällt, wobei die erste Symmetrieachse und die zweite Symmetrieachse parallel zueinander verlaufen und einen Versatz zueinander aufweisen, der im wesentlichen gleich dem Versatz zwischen der optischen Achse der optischen Einheit und der ersten Symmetrieachse der Referenzgeometrie ist.

Das Koppelelement weist dabei eine Außenfläche auf, die eine dritte Symmetrieachse definiert, wobei das Koppelelement so an dem optischen Modul angeordnet wird, dass die dritte Symmetrieachse mit der Symmetrieachse der Referenzgeometrie zusammenfällt.

Das erfindungsgemäße Verfahren sieht weiterhin vor, ein solches Koppelelement aus einer Mehrzahl von Koppelelementen mit unterschiedlichem Versatz zwischen zweiter und dritter Symmetrieachse auszuwählen, bei dem der Versatz zwischen der zweiten und dritten Symmetrieachse im wesentlichen gleich dem Versatz zwischen der ersten Symmetrieachse und der optischen Achse ist.

Mit anderen Worten wird ein solches Koppelelement ausgewählt, mit dem der Versatz zwischen der optischen Achse der optischen Einheit und der Symmetrieachse der Referenzgeometrie ausgeglichen wird.

Die erfindungsgemäße Lösung beruht auf dem Gedanken, den Versatz zwischen der idealen Position einer optischen Einheit in Bezug auf das optische Modul und der tatsächlichen Position zu bestimmen und zur Kompensation dieses Versatzes ein Koppelelement einzusetzen, das diesen Versatz kompensiert. In der idealen Position der optischen Einheit liegt die optische Achse der optischen Einheit auf der Symmetrieachse einer Referenzgeometrie des optischen Moduls. Die Referenzgeometrie ist beispielsweise ein Stutzen, der der Aufnahme des Koppelelementes dient.

In der Praxis wird die optische Einheit aufgrund von Toleranzen in der Regel nicht in der idealen Position am optischen Modul angebracht, in der die optische Achse mit der Symmetrieachse der Referenzgeometrie übereinstimmt. Vielmehr liegt ein Versatz vor. Die erfindungsgemäße Lösung sieht vor, ein Koppelelement mit einer Aussparung bereitzustellen und derart in Bezug auf die optische Einheit am Modul zu befestigen, dass die Symmetrieachse der Aussparung mit der optischen Achse der optischen Einheit zusammenfällt. Die Symmetrieachse der Aussparung ist dabei gerade um den festgestellten Versatz gegenüber der Symmetrieachse (also der mechanischen Achse) der Referenzgeometrie verschoben.

In einer bevorzugten Ausgestaltung der Erfindung handelt es sich bei dem Koppelelement um eine längliche Hülse mit einer exzentrischen Bohrung. Die Hülse weist zwei Symmetrieachsen auf. Die eine Symmetrieachse wird durch die Symmetrieachse der Außenkontur bzw. Außenfläche der Hülse definiert, die andere Symmetrieachse durch die Symmetrieachse der Innenkontur bzw. Innenfläche. Es wird nach Feststellen des Versatzes zwischen der optischen Achse der optischen Einheit und der Symmetrieachse der Referenzgeometrie eine Hülse mit einer Ausgestaltung an dem optischen Modul befestigt, bei der der Abstand zwischen den beiden Symmetrieachsen der Hülse gerade dem Versatz zwischen der optischen Achse der optischen Einheit und der Symmetrieachse der Referenzgeometrie entspricht.

Die Erfindung betrifft auch einen Bausatz mit einem optischen Modul, das eine optische Einheit und eine Referenzgeometrie aufweist, sowie mit einer Mehrzahl von Koppelelementen. Dabei weist jedes Koppelelement des Bausatzes eine Innenfläche, die eine zweite Symmetrieachse definiert und eine Außenfläche, die eine dritte Symmetrieachse definiert, auf, wobei der Versatz zwischen der zweiten und dritten Symmetrieachse bei den einzelnen Koppelelementen des Bausatzes unterschiedlich groß ist. Bevorzugt sind die Koppelelemente jeweils als Hülse mit einer symmetrischen Außenkontur, die die dritte Symmetrieachse definiert, und einer dazu exzentrischen Bohrung, die die zweite Symmetrieachse definiert, ausgebildet.

Nach Feststellen eines Versatzes zwischen der optischen Achse der optischen Einheit und der Symmetrieachse der Referenzgeometrie wird dann ein solches Koppelelement mit dem optischen Modul verbunden, bei dem der Versatz der optischen Symmetrieachsen dem Versatz von optischer Achse der optischen Einheit und der Symmetrieachse der Referenzgeometrie entspricht.

Das Koppelelement wird in der geeigneten Position dabei dauerhaft an dem optischen Modul fixiert, etwa durch Kleben, Reibschweißen oder Laserschweißen.

Die erfindungsgemäße Lösung stellt eine Entzerrung der Justageprozesse bereit, wodurch die Taktzeit in Hinblick auf eine Hochvolumenproduktion wesentlich verringert und somit die Produktionskosten erheblich gesenkt werden können.

Zur Feststellung eines Versatzes zwischen der optischen Achse des optischen Elementes und der mechanischen Achse der Referenzgeometrie werden beispielsweise Bilderkennungsverfahren eingesetzt. Hierzu werden beispielsweise die Referenzgeometrie und die aktuelle Position der optischen Einheit mittels einer Kamera erfasst und wird mittels eines Mustererkennungsprogrammes der Versatz der optischen Einheit gegenüber der Referenzgeometrie bestimmt .

Die Referenzgeometrie dient bevorzugt nicht nur als Referenz für die Anordnung der optischen Einheit, sondern auch der mechanischen Ankopplung und Befestigung des Koppelelementes an der optischen Einheit. Eine solche Befestigung ist in einfacher Weise möglich, da die Symmetrieachse der Referenzgeometrie und die durch die äußere Kontur des Koppelelementes definierte Symmetrieachse des Koppelelementes nach der Befestigung bevorzugt identisch sind. Die Symmetrieachse der Bohrung des Koppelelementes ist dagegen hierzu versetzt und in Übereinstimmung mit der optischen Achse der optischen Einheit.

Die Erfindung wird nachfolgend unter Bezugnahme der Figuren der Zeichnung anhand mehrerer Ausführungsbeispiele näher erläutert. Es zeigen:
- Figur 1: schematisch die Anordnung einer optischen Einheit in einem optischen Modul, das eine Referenzgeometrie aufweist;
- Figur 2: die Anordnung einer optischen Einheit in einem optischen Modul mit einer Referenzgeometrie, wobei zusätzlich eine Hülse mit einer zentrischen Bohrung zur Ankopplung eines Lichtwellenleiters vorgesehen ist;
- Figur 3: die Anordnung einer optischen Einheit in einem optischen Modul mit einer Referenzgeometrie, wobei zusätzlich eine Hülse mit einer exzentrisch ausgebildeten Bohrung zur Ankopplung eines Lichtwellenleiters vorgesehen ist;
- Figur 4a: ein erstes Ausführungsbeispiel einer Hülse mit exzentrischer Bohrung;
- Figur 4b: zum Vergleich eine Hülse gemäß Figur 4a mit nicht exzentrischer Bohrung;
- Figur 5a: ein zweites Ausführungsbeispiel einer Hülse mit exzentrischer Bohrung;
- Figur 5b: zum Vergleich eine Hülse gemäß Figur 5a mit nicht exzentrischer Bohrung;
- Figur 6a: ein drittes Ausführungsbeispiel einer Hülse mit exzentrischer Bohrung;
- Figur 6b: zum Vergleich eine Hülse gemäß Figur 6a mit nicht exzentrischer Bohrung und
- Figur 7: ein optoelektronisches Modul mit einem auf einem Leadframe angeordneten Sende- oder Empfangsbauelement.

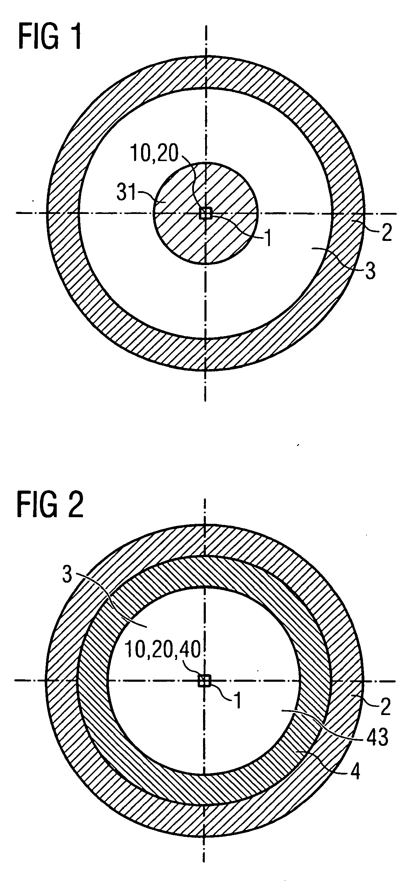

Anhand der Figuren 1 bis 3 wird zunächst das grundlegende Konzept der vorliegenden Erfindung erläutert. Die Figur 1 zeigt in Draufsicht eine optische Einheit 1, die auf einer Referenzfläche 3 eines optischen Moduls (nicht näher dargestellt) angeordnet ist. Bei dem optischen Modul handelt es sich insbesondere um ein optoelektronisches Sendemodul und/oder ein optoelektronisches Empfangsmodul, beispielsweise einen optoelektronischen Transceiver. Die Referenzfläche 3 ist beispielsweise die Oberfläche eines Trägersubstrats, auf dem die optische Einheit 1 in an sich bekannter Weise mechanisch befestigt und elektrisch kontaktiert ist.

Die optische Einheit 1 kann grundsätzlich in beliebiger Weise ausgebildet sein. Bevorzugt handelt es sich um eine Leuchtdiode (LED), eine vertikal emittierende Laserdiode (VCSEL), eine Fotodiode, einen Spiegel oder eine andere optische Funktionsfläche, über die Licht empfangen oder ausgesandt wird. Die optische Einheit ist bevorzugt als vorgefertigter Chip ausgebildet, der auf der Referenzfläche 3 aufgesetzt wird. Sie wird im Folgenden daher auch als optischer Chip 1 bezeichnet. Die optische Einheit 1 weist eine optische Achse 10 auf, die am Schnittpunkt des in Figur 1 gestrichelt dargestellten Koordinatenkreuzes liegt. Entlang der optischen Achse 10 wird von dem optischen Chip 1 Licht ausgesandt bzw. Licht empfangen. Die optische Achse 10 verläuft senkrecht zur Zeichenebene der Figur 1.

Die Referenzstruktur 2 ist an der optischen Einheit ausgebildet und dient, wie noch ausgeführt wird, unter anderem der Ankopplung von Strukturen, die der Befestigung eines Lichtwellenleiters an dem optischen Modul dienen und die eine genaue Justage eines solchen Lichtwellenleiters in Bezug auf den optischen Chip 1 ermöglichen.

Die Referenzgeometrie 2 besitzt eine symmetrische Form. Im dargestellten Ausführungsbeispiel ist die Referenzgeometrie 2 zylindrisch ausgebildet, so dass sie in der Schnittdarstellung und in der Vorderansicht kreisförmig ist. Es sei an dieser Stelle jedoch darauf hingewiesen, dass auch andere geometrische Formen möglich sind, beispielsweise eine N-eckige Form. Auch muss die Referenzgeometrie keine kontinuierliche geometrische Struktur aufweisen. Sie kann ebenso aus einzelnen Punkten oder Bereichen, beispielsweise aus drei oder vier Punkten bestehen, die miteinander nicht verbunden sind. Es ist aber von Bedeutung, dass die Referenzgeometrie eine innere Symmetrie aufweist, die eine erste Symmetrieachse 20 definiert.

In der Figur 1 fällt die Symmetrieachse 20 der Referenzstruktur 2 mit der optischen Achse 10 des optischen Chips 1 überein, da der optische Chip 1 genau in der Mitte der Referenzgeometrie angeordnet ist. Dies ist der Idealzustand, der praktisch jedoch nur selten zu erreichen ist. In der Regel wird der optische Chip 1 innerhalb eines Bereiches 31 der Referenzfläche 3 angeordnet sein. Dieser Bereich 31 gibt einen Versatzbereich an, in dem die optische Achse des Chips 1 nicht mit der geometrischen Achse der Referenzstruktur 2 übereinstimmt.

Die Figur 2 zeigt eine Anordnung, bei der innerhalb der Referenzstruktur 2 der Figur 1 zusätzlich eine längliche Hülse 4 mit einer inneren Bohrung bzw. Aussparung 43 angeordnet ist. Die Hülse 4 ist symmetrisch aufgebaut und die Bohrung 43 ist zentrisch in der Hülse 4 ausgebildet. Auch die Hülse 4 besitzt eine Symmetrieachse 40, die aufgrund der symmetrischen Anordnung der Hülse 4 in der Referenzgeometrie 2 zum einen mit der Symmetrieachse 20 der Referenzgeometrie 2 und zum anderen mit der optischen Achse 10 des optischen Chips übereinstimmt.

Auch die Figur 2 gibt den idealen, jedoch nicht realistischen Fall an, dass die Platzierung des optischen Chips 1 auf der Referenzfläche 3 derart gelingt, dass der optische Chip 1 gerade auf der Symmetrieachse der Referenzgeometrie der Referenzgeometrie 2 liegt.

Im Übrigen sei angemerkt, dass die Referenzgeometrie 2 beispielsweise durch einen zylindrischen Stutzen gebildet wird, in den die zylindrische Hülse eingeführt wird. Der Außendurchmesser der zylindrischen Hülse 4 entspricht dabei gerade dem Innendurchmesser des zylindrischen Stutzens 2, so dass die Hülse im Wesentlichen spielfrei in den Stutzen 2 einsetzbar ist. Das dem optischen Chip 1 abgewandte Ende der Hülse 4 dient der Aufnahme und Ankopplung eines Lichtwellenleiters, so dass die Hülse eine Ausrichtung zwischen dem optischen Chip 1 und einem anzukoppelnden Lichtwellenleiter bereitstellt.

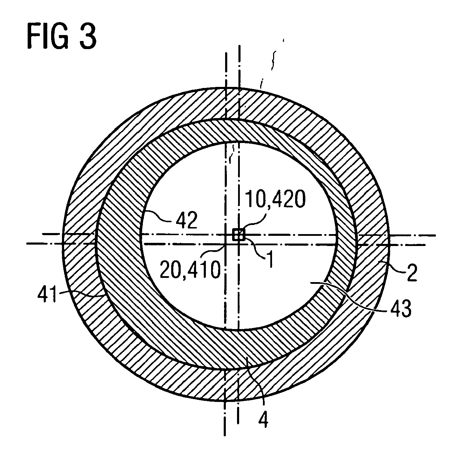

Die Figur 3 zeigt nun den in der Praxis realistischen Fall, dass der optische Chip 1 mit einem Versatz gegenüber der Referenzgeometrie 2 auf der Referenzfläche der optischen Einheit montiert ist. Dies bedeutet, dass die optische Achse 10 des optischen Chips 1 und die Symmetrieachse 20 der Referenzgeometrie 2 nicht mehr zusammenfallen, sondern vielmehr unter Vorliegen eines Versatzes parallel zueinander verlaufen.

Zum Ausgleich dieses Versatzes bei Ankopplung eines Lichtwellenleiters ist nun eine speziell ausgebildete Koppelstruktur vorgesehen. Hierzu wird eine Hülse 4 bereitgestellt, die eine exzentrische Bohrung bzw. Aussparung 43 aufweist. Die Wandung der Hülse 4 besitzt dabei eine Außenkontur 41 und eine Innenkontur 42, die zwischen sich eine Hülsenwandung mit vaiierender Dicke ausbilden. Die Innenkontur 42 der Hülse, d.h. die Innenwandung, die die zylindrische Bohrung 43 definiert, besitzt eine erste Symmetrieachse 420 der Hülse 4. Die erste Symmetrieachse verläuft dabei naturgemäß entlang der Mitte bzw. Achse der Bohrung 43. Dagegen definiert die Außenkontur 41, d.h. die Außenwandung der Hülse 4 eine weitere Symmetrieachse 410. Die beiden Achsen 420, 410 sind zueinander versetzt.

Es ist unmittelbar ersichtlich, dass die Symmetrieachse 410 der Außenwandung der Hülse 4 auf der Symmetrieachse 20 der Referenzgeometrie 2 liegt. Dies hängt damit zusammen, dass die Außenwandung 41 symmetrisch zur Referenzgeometrie verläuft.

Die Symmetrieachse 420 in Bezug auf die Innenwandung 42 bzw. der Bohrung 43 ist dagegen von der Symmetrieachse 20 der Referenzgeometrie versetzt. Es ist nun vorgesehen, eine Hülse 4 zu wählen, bei der der Versatz zwischen den beiden Symmetrieachsen 410, 420 der Hülse im wesentlichen gleich dem Versatz zwischen der optischen Achse 10 des optischen Chips 1 und der Symmetrieachse 20 der Referenzgeometrie 2 ist, und zwar sowohl hinsichtlich Betrag als auch (nach entsprechendem Drehen der Hülse) hinsichtlich Richtung. Hierdurch wird erreicht, dass die Symmetrieachse 420 der Bohrung 43 mit der optischen Achse 10 des optischen Chips übereinstimmt. Auf diese Weise ist eine in das dem optischen Chip 1 abgewandte Ende der Hülse 4 eingeführte Lichtleitfaser automatisch exakt gegenüber dem optischen Chip 1 justiert und positioniert, d.h. die ein- bzw. ausgekoppelte Leistung ist maximal. Dies wird dabei ohne das Erfordernis einer aktiven Justage erreicht.

Zur Ausrichtung einer optischen Faser in Bezug auf eine optische Einheit 1 werden folgende Verfahrensschritte durchlaufen.

Nachdem der optische Chip 1 auf der Referenzfläche 3 des optischen Moduls montiert ist, wird zunächst festgestellt, welchen Versatz der optische Chip 1 bzw. die optische Achse 10 des optischen Chips in Bezug auf die Symmetrieachse 20 der am optischen Modul vorgesehenen Referenzgeometrie 2 besitzt. Es wird also festgestellt, an welcher Stelle des Versatzfeldes 31 (Figur 1) der optische Chip 1 tatsächlich platziert wurde. Eine solche Bestimmung erfolgt bevorzugt mittels eines Bilderkennungsverfahrens. Beispielsweise werden die Referenzgeometrie und der optische Chip mittels einer Kamera erfasst und ihre Position mittels eines Mustererkennungssystems ermittelt. Das Mustererkennungssystem bestimmt den Versatz (Abweichung der Ist-Lage von der Soll-Lage) des optischen Chips 1 gegenüber der Referenzgeometrie 2. Der Versatz ist ein Vektor mit einer bestimmten Länge und einer bestimmten Richtung.

Nach Bestimmung des Versatzes wird nun aus einem Bausatz mit mehreren Hülsen mit exzentrischer Bohrung eine geeignete Hülse 4 ausgewählt, mittels der sich der Versatz kompensieren lässt.

Dabei wird eine Hülse 4 ausgewählt, bei der der Abstand zwischen den beiden in Bezug auf die Figur 3 erläuterten Symmetrieachsen 410, 420 gerade gleich dem Betrag des Versatzvektors entspricht. Die Hülse wird in Bezug auf die Referenzgeometrie 2 an dem optischen Modul befestigt und in eine Position gedreht, in der auch die Richtung des Versatzes übereinstimmt. Das Endergebnis ist die in Figur 3 dargestellte Situation.

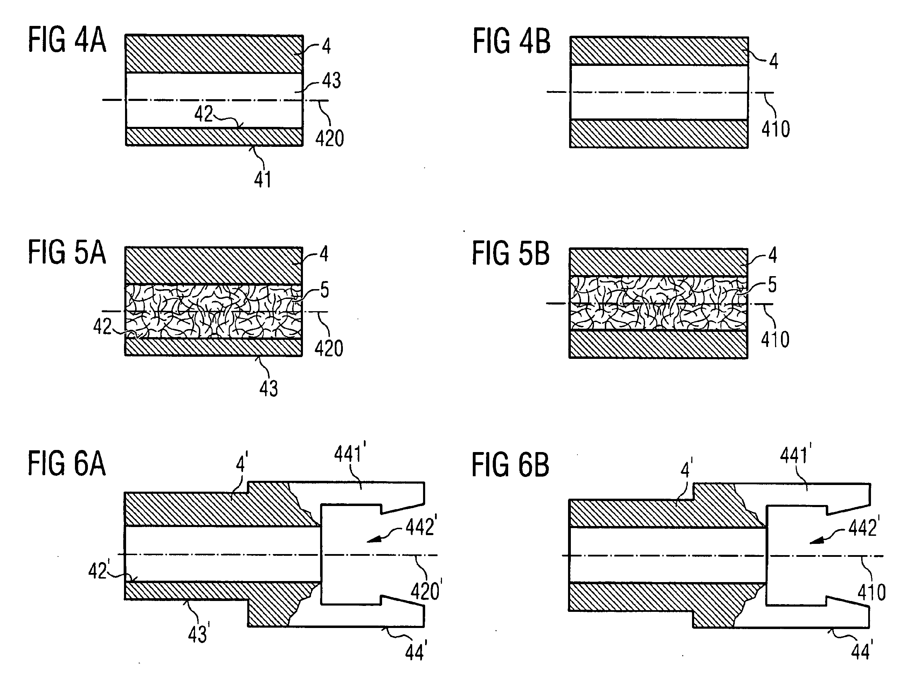

Die Figuren 4a, 5a und 6a zeigen mehrere Ausführungsbeispiele für Hülsen 4, 4', wie sie in einer Anordnung gemäß Figur 3 einsetzbar sind. Die Hülsen sind dabei in seitlicher Schnittansicht dargestellt. Die jeweils zugeordneten Figuren 4b, 5b und 6b zeigen die entsprechenden Hülsen mit einer symmetrischen Bohrung, d.h. ohne eine exzentrische Bohrung 43.

Die Figur 4a zeigt eine Hülse 4 entsprechend der Hülse 4 der Figur 3. Eine Bohrung 43 mit einer Symmetrieachse 420 ist exzentrisch in der Hülse 4 ausgebildet. Figur 4b zeigt eine Hülse mit symmetrischer Bohrung und der Symmetrieachse 410 bezüglich der Außenwandung der Hülse.

Die Hülse 4 kann aus Metall, Keramik oder Kunststoff bestehen. Eine Faser wird beispielsweise über eine Steckerschnittstelle (receptacle) direkt von einer Seite in die Öffnung 43 der Hülse 4 eingeführt. Derartige Kopplungen sind an sich bekannt, so dass auf sie nicht weiter eingegangen wird.

In der Figur 5a ist die Hülse entsprechend der Figur 4a ausgebildet. Es ist in der Bohrung 43 in diesem Fall jedoch ein sogenannter Faserstummel bzw. fiberstub 5 befestigt. Es ist somit ein Lichtwellenleiterabschnitt 5 fest in die Hülse 4 integriert, der als Koppelelement dient und zum einen mit einem optoelektronischen Sende- und/oder Empfangsbauelement (Chip 1) und zum anderen mit einer anzukoppelnden Lichtleitfaser optisch gekoppelt wird. Die Ankopplung einer Lichtleitfaser an die eine Seite des Faserstummels 5 erfolgt in an sich bekannter Weise beispielsweise mittels eines Umgehäuses, in dem die einzelnen Komponenten angeordnet sind. Die Figur 5b zeigt eine Hülse 4 mit Faserstummel 5, die eine symmetrische Bohrung aufweist.

Gemäß der Ausgestaltung der Figur 6a bildet das eine Ende eine Hülse 4' ein Rastteil 44' aus, das Raststrukturen 441' und eine Aufnahmeöffnung 422' zur Ankopplung eines optischen Steckers aufweist. Durch Einführen eines optischen Steckers in die Öffnung 442' und eine entsprechende Verrastung kann ein optischer Stecker mit einer Lichtleitfaser mittels einer Schnappverbindung mit der Hülse 4' verbunden werden. Die Figur 6b zeigt wiederum eine Hülse 4' mit symmetrisch ausgebildeter Aussparung.

Es wird darauf hingewiesen, dass die Hülse 4, 4', wie in der Figur 3 dargestellt, bevorzugt über die Referenzgeometrie 2 am optischen Modul befestigt wird. Hierzu wird die Hülse 4 an der Referenzgeometrie durch Kleben, Schweißen oder eine andere dauerhafte Verbindungsart befestigt und fixiert. Die Referenzgeometrie dient also der Befestigung der Hülse 4. Dies ist zwar vorteilhafterweise, jedoch nicht notwendigerweise der Fall. So kann die Referenzgeometrie auch allein zur Bestimmung eines Versatzes des optischen Chips 1 verwendet werden und eine Befestigung der Hülse 4 an dem optischen Modul auch über andere Befestigungsstrukturen erfolgen.

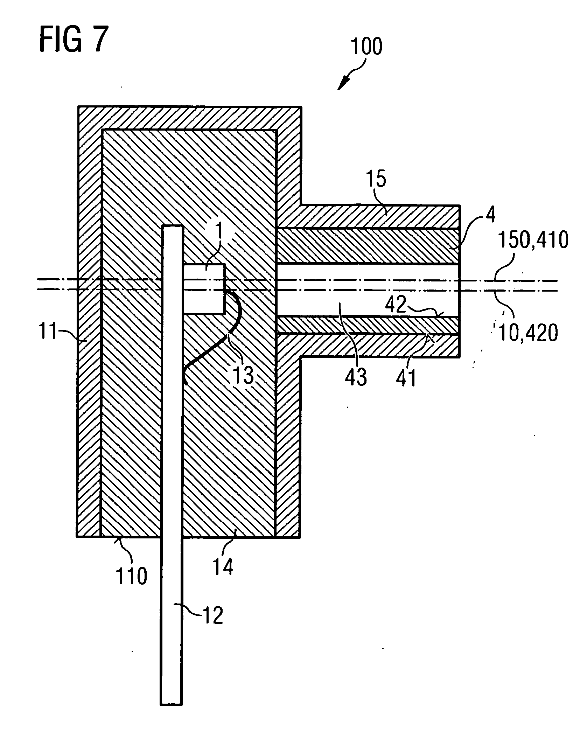

Die Figur 7 zeigt ein optisches Modul 100 mit einem mit einem transparenten Vergussmaterial 14 gefüllten Gehäuse 11, in dem durch eine untere Gehäuseöffnung 110 ein Leadframe 12 eingeführt ist. Auf dem Leadframe 12 befindet sich ein optischer Chip 1, der mittels eines Bonddrahtes 13 und einem weiteren, nicht dargestellten Kontakt elektrisch kontaktiert ist. Das Gehäuse 11 bildet des Weiteren als Referenzgeometrie einen Stutzen 15 aus, der der Ankopplung einer Lichtleitfaser dient. Der Stutzen weist eine Symmetrieachse 150 auf. Der optische Chip 1 weist eine optische Achse 10 auf, die idealerweise mit der Symmetrieachse 150 des Stutzen übereinstimmen würde. In der Realität und im dargestellten Ausführungsbeispiel ist dies jedoch nicht der Fall, so dass die Achsen 10, 150 zueinander versetzt sind.

Es ist nun in den Stutzen 15 eine Hülse 4 gemäß den Figuren 3 und 4a eingesetzt, die eine exzentrische Bohrung 43 aufweist. Die Symmetrieachse 420 der Bohrung 43 liegt dabei auf der optischen Achse 10 des optischen Chips 1. Die Symmetrieachse 410 der Außenwandung 41 der Hülse 4 liegt dagegen auf der Symmetrieachse 150 des Ankoppelstutzens 15. Letzteres ermöglicht den problemlosen Einsatz der Hülse 4 in den Ankoppelstutzen 15. Da die Symmetrieachse 420 der Bohrung 43 mit der optischen Achse 10 des optischen Chips übereinstimmt, kann eine Lichtleitfaser in idealer Koppelposition an der Hülse 4 und dem Koppelstutzen 15 befestigt werden.

Zwischen dem optischen Chip 1 und der angekoppelten Lichtleitfaser ist bevorzugt eine nicht dargestellte Linse angeordnet, wie dies etwa in der DE 199 09 242 A1 beschrieben ist.

## Patentansprüche

1. Verfahren zur Ausrichtung eines Lichtwellenleiters in Bezug auf eine optische Einheit (1), die in oder an einem optischen Modul (100) angeordnet ist, wobei
- die optische Einheit (1) eine optische Achse (10) aufweist, entlang derer Licht von der optischen Einheit (1) ausgesandt oder empfangen wird,
- das optische Modul (100) eine Referenzgeometrie (2, 15) aufweist, die eine Führungsstruktur ausbildet, die genau eine erste Symmetrieachse (20, 150) definiert,
- Betrag und Richtung eines Versatzes zwischen der optischen Achse (10) der optischen Einheit (1) und der Symmetrieachse (20, 150) der Referenzgeometrie (2, 15) bestimmt werden,
- ein Koppelelement (4) bereitgestellt wird, das der Aufnahme bzw. Ankopplung eines in Bezug auf die optische Einheit (1) auszurichtenden Lichtwellenleiters dient, und das hierzu eine durch eine Innenfläche (41) begrenzte Bohrung (43) aufweist, wobei die Innenfläche (41) eine zweite Symmetrieachse (420) definiert,
- das Koppelelementes (4) in Bezug auf das optische Modul derart angeordnet wird, dass die zweite Symmetrieachse (420) mit der optischen Achse (10) der optischen Einheit (1) zusammenfällt, wobei
- die erste Symmetrieachse (20, 150) und die zweite Symmetrieachse (420) parallel zueinander verlaufen und einen Versatz zueinander aufweisen, der im wesentlichen gleich dem Versatz zwischen der optischen Achse (10) der optischen Einheit (1) und der ersten Symmetrieachse (20, 150) der Referenzgeometrie (2, 15) ist,
- das Koppelelement (4) eine Außenfläche (41) aufweist, die eine dritte Symmetrieachse (410) definiert, die von der zweiten Symmetrieachse abweicht, und das Koppelelement (4) derart in Bezug auf das optische Modul angeordnet wird, dass die dritte Symmetrieachse (410) auf der ersten Symmetrieachse (20, 150) der Referenzgeometrie (2, 15) liegt, und
- das Koppelelement (4) eine mit der Führungsstruktur der Referenzgeometrie (2, 15) korrespondierende Struktur aufweist, so dass das Koppelelement (4) im wesentlichen spielfrei gegenüber der Referenzgeometrie (2, 15) platzierbar ist,
**dadurch gekennzeichnet, dass**
- ein solches Koppelelement (4) aus einer Mehrzahl von Koppelelementen mit unterschiedlichem Versatz zwischen zweiter und dritter Symmetrieachse (420, 410) ausgewählt wird, bei dem der Versatz zwischen der zweiten und dritten Symmetrieachse (420, 410) im wesentlichen gleich dem Versatz zwischen der ersten Symmetrieachse (20, 150) und der optischen Achse (10) ist.

2. Verfahren nach mindestens einem der vorangehenden Ansprüche, **dadurch gekennzeichnet, dass** die Referenzgeometrie (2, 15) einen zylindrischen Stutzen und/oder das Koppelelement (4) eine zylindrische Hülse mit einer exzentrischen Bohrung (43) aufweist.

3. Verfahren nach mindestens einem der vorangehenden Ansprüche, **dadurch gekennzeichnet, dass** das Koppelelement (4) mittels der Referenzgeometrie (2, 15) an dem optischen Modul befestigt wird.

4. Verfahren nach mindestens einem der vorangehenden Ansprüche, **dadurch gekennzeichnet, dass** der Versatz zwischen der optischen Achse (10) des optischen Elementes (1) und der Symmetrieachse (20, 150) der Referenzgeometrie (2, 15) über ein Bilderkennungsverfahren erfasst wird.

5. Anordnung mit einem Koppelelement und einem optischen Modul, das eine optische Einheit (1) und eine Referenzgeometrie (2, 15) aufweist, wobei
- die optische Einheit (1) eine optische Achse (10) aufweist, entlang derer Licht von der optischen Einheit (1) ausgesandt oder empfangen wird, und
- die Referenzgeometrie (2, 15) eine Führungsstruktur ausbildet, die genau eine erste Symmetrieachse aufweist,
- die optische Achse (10) der optischen Einheit (1) und die Symmetrieachse (20, 150) der Referenzgeometrie (2, 15) einen Versatz zueinander aufweisen,
- ein Koppelelement (4) vorgesehen ist, das der Aufnahme bzw. Ankopplung eines mit der optischen Einheit (1) optisch zu koppelnden Lichtwellenleiters dient,
- das Koppelelement (4) eine durch eine Innenfläche (41) begrenzte Bohrung (43) aufweist, wobei die Innenfläche (41) des Koppelelements (4) eine zweite Symmetrieachse (420) definiert, wobei
- das Koppelelement (4) eine mit der Führungsstruktur der Referenzgeometrie (2, 15) korrespondierende Struktur aufweist, so dass das Koppelelement (4) im wesentlichen spielfrei gegenüber der Referenzgeometrie (2, 15) platzierbar ist,
- das Koppelelement (4) derart in Bezug auf das optische Modul (100) angeordnet ist, dass die zweite Symmetrieachse (420) mit der optischen Achse (10) der optischen Einheit (1) zusammenfällt, und
- die erste Symmetrieachse (20, 150) und die zweite Symmetrieachse (420) dabei parallel zueinander verlaufen und einen Versatz zueinander aufweisen, der im wesentlichen gleich dem Versatz zwischen der optischen Achse (10) der optischen Einheit (1) und der ersten Symmetrieachse (20, 150) der Referenzgeometrie (2) ist,
**dadurch gekennzeichnet, dass**
das Koppelelement (4) einteilig ausgebildet ist.

6. Anordnung nach Anspruch 5, **dadurch gekennzeichnet, dass** das Koppelelement (4) eine Außenfläche (41) aufweist, die eine dritte Symmetrieachse (410) definiert, die von der zweiten Symmetrieachse abweicht, und das Koppelelement (4) derart in Bezug auf das optische Modul angeordnet ist, dass die dritte Symmetrieachse (410) auf der ersten Symmetrieachse (20, 150) der Referenzgeometrie (2, 15) liegt.

7. Anordnung nach Anspruch 5 oder 6, **dadurch gekennzeichnet, dass** das Koppelelement (4) durch eine Hülse mit einer exzentrischen Bohrung (43) gebildet ist.

8. Anordnung nach mindestens einem der Ansprüche 5 bis 7, **dadurch gekennzeichnet, dass** die Hülse (4) mittels der Referenzgeometrie (2, 15) an dem optischen Modul befestigt ist.

9. Anordnung nach mindestens einem der Ansprüche 5 bis 8, **dadurch gekennzeichnet, dass** die optische Einheit (1) eine Leuchtdiode, eine Laserdiode, eine Fotodiode oder ein Spiegel ist.

10. Anordnung nach mindestens einem der Ansprüche 5 bis 9, **dadurch gekennzeichnet, dass** die optische Einheit (1) als Chip ausgebildet ist.

11. Anordnung nach mindestens einem der Ansprüche 5 bis 10, **dadurch gekennzeichnet, dass** das Koppelelement (4') an der der optischen Einheit abgewandten Seite Raststrukturen (44') zur Ankopplung eines optischen Steckers mit einem Lichtwellenleiter aufweist.

12. Anordnung nach mindestens einem der Ansprüche 5 bis 11, **dadurch gekennzeichnet, dass** die Referenzgeometrie (2, 15) im Querschnitt kreisförmig oder als N-Eck ausgebildet ist.

13. Bausatz mit
- einem optischen Modul nach Anspruch 5, das eine optische Einheit (1) und eine Referenzgeometrie (2, 15) aufweist, die eine Führungsstruktur ausbildet, die genau eine erste Symmetrieachse aufweist,
- sowie mit einer Mehrzahl von einteilig ausgebildeten Koppelelementen (4), wobei
- jedes Koppelelement des Bausatzes eine Innenfläche (42), die eine zweite Symmetrieachse (420) definiert und eine Außenfläche (41), die eine dritte Symmetrieachse definiert (410), aufweist, wobei
- die zweite und dritte Symmetrieachse einen definierten Versatz zueinander aufweisen, der bei den einzelnen Koppelelementen des Bausatzes unterschiedlich groß ist, und
- die Koppelelemente (4) jeweils eine mit der Führungsstruktur der Referenzgeometrie (2, 15) korrespondierende Struktur aufweisen, so dass die Koppelelemente (4) im wesentlichen spielfrei gegenüber der Referenzgeometrie (2, 15) platzierbar sind.

14. Bausatz nach Anspruch 13, **dadurch gekennzeichnet, dass** die Koppelelemente (4) jeweils als Hülse mit einer symmetrischen Außenkontur, die die dritte Symmetrieachse (410) definiert, und einer dazu exzentrischen Bohrung (43), die die zweite Symmetrieachse (420) definiert, ausgebildet ist.

## Claims

1. Method for orienting an optical waveguide in relation to an optical unit (1) arranged in or on an optical module (100),
- the optical unit (1) having an optical axis (10) along which light is emitted or received by the optical unit (1), and
- the optical module (100) having a reference geometry (2, 15), which forms a guide structure which precisely defines a first axis (20, 150) of symmetry,
- the magnitude and direction of an offset between the optical axis (10) of the optical unit (1) and the axis (20, 150) of symmetry of the reference geometry (2, 15) being determined,
- a coupling element (4) being provided, which serves for receiving or coupling an optical waveguide that is to be oriented in relation to the optical unit (1), and which has for this purpose a hole (43) delimited by an internal area (41), the internal area (41) defining a second axis (420) of symmetry,
- the coupling element (4) being arranged in relation to the optical module in such a way that the second axis (420) of symmetry coincides with the optical axis (10) of the optical unit (1),
- the first axis (20, 150) of symmetry and the second axis (420) of symmetry running parallel to one another and having an offset with respect to one another which is essentially equal to the offset between the optical axis (10) of the optical unit (1) and the first axis (20, 150) of symmetry of the reference geometry (2, 15),
- the coupling element (4) having an external area (41) defining a third axis (410) of symmetry, which deviates from the second axis of symmetry, and the coupling element (4) is arranged in relation to the optical module in such a way that the third axis (410) of symmetry lies on the first axis (20, 150) of symmetry of the reference geometry (2, 15), and
- the coupling element (4) having a structure corresponding to the guide structure of the reference geometry (2, 15), so that the coupling element (4) can be positioned essentially in a manner free of play with respect to the reference geometry (2, 15),
**characterized in that**
- such a coupling element (4) is selected from a plurality of coupling elements having a different offset between the second and third axes (420, 410) of symmetry, the offset between the second and third axes (420, 410) of symmetry of which coupling element is essentially equal to the offset between the first axis (20, 150) of symmetry and the optical axis (10).

2. Method according to at least one of the preceding claims, **characterized in that** the reference geometry (2, 15) has a cylindrical connector and/or the coupling element (4) has a cylindrical sleeve with an eccentric hole (43).

3. Method according to at least one of the preceding claims, **characterized in that** the coupling element (4) is fixed to the optical module by means of the reference geometry (2, 15).

4. Method according to at least one of the preceding claims, **characterized in that** the offset between the optical axis (10) of the optical element (1) and the axis (20, 150) of symmetry of the reference geometry (2, 15) is detected by means of an image recognition method.

5. Arrangement with a coupling element and an optical module, the optical module having an optical unit (1) and a reference geometry (2, 15),
- the optical unit (1) having an optical axis (10) along which light is emitted or received by the optical unit (1), and
- the reference geometry (2, 15) forming a guide structure which has precisely one first axis of symmetry,
- the optical axis (10) of the optical unit (1) and the axis (20, 150) of symmetry of the reference geometry (2, 15) having an offset with respect to one another,
- a coupling element (4) being provided, which serves for receiving or coupling an optical waveguide that is to be optically coupled to the optical unit (1) .
- the coupling element (4) having a hole (43) delimited by an internal area (41), the internal area (41) of the coupling element (4) defining a second axis (420) of symmetry,
- the coupling element (4) having a structure corresponding to the guide structure of the reference geometry (2, 15), so that the coupling element (4) can be positioned essentially in a manner free of play with respect to the reference geometry (2, 15),
- the coupling element (4) being arranged in relation to the optical module (100) in such a way that the second axis (420) of symmetry coincides with the optical axis (10) of the optical unit (1), and
- the first axis (20, 150) of symmetry and the second axis (420) of symmetry in this case run parallel to one another and have an offset with respect to one another which is essentially equal to the offset between the optical axis (10) of the optical unit (1) and the first axis (20, 150) of symmetry of the reference geometry (2),
**characterized in that**
the coupling element (4) is formed in one piece.

6. Arrangement according to Claim 5, **characterized in that** the coupling element (4) has an external area (41) defining a third axis (410) of symmetry, which deviates from the second axis of symmetry, and the coupling element (4) is arranged in relation to the optical module in such a way that the third axis (410) of symmetry lies on the first axis (20, 150) of symmetry of the reference geometry (2, 15).

7. Arrangement according to Claim 5 or 6, **characterized in that** the coupling element (4) is formed by a sleeve with an eccentric hole (43).

8. Arrangement according to at least one of Claims 5 to 7, **characterized in that** the sleeve (4) is fixed to the optical module by means of the reference geometry (2, 15).

9. Arrangement according to at least one of Claims 5 to 8, **characterized in that** the optical unit (1) is a light-emitting diode, a laser diode, a photodiode or a mirror.

10. Arrangement according to at least one of Claims 5 to 9, **characterized in that** the optical unit (1) is formed as a chip.

11. Arrangement according to at least one of Claims 5 to 10, **characterized in that** the coupling element (4') has, on the side remote from the optical unit, latching structures (44') for coupling an optical plug with an optical waveguide.

12. Module according to at least one of Claims 5 to 11, **characterized in that** the reference geometry (2, 15) is formed cross-sectionally in circular fashion or as an N-sided polygon.

13. Constructional kit having
- an optical module according to Claim 5, which has an optical unit (1) and a reference geometry (2, 15), which forms a guide structure which has precisely one first axis of symmetry
- and having a plurality of coupling elements (4) formed in one piece,
- each coupling element of the constructional kit having an internal area (42) defining a second axis (420) of symmetry and an external area (41) defining a third axis (410) of symmetry,
- the second and third axes of symmetry having a defined offset with respect to one another which is of different magnitude in the case of the individual coupling elements of the constructional kit, and
- the coupling elements (4) in each case having a structure corresponding to the guide structure of the reference geometry (2, 15), so that the coupling elements (4) can be positioned essentially in a manner free of play with respect to the reference geometry (2, 15).

14. Constructional kit according to Claim 13, **characterized in that** the coupling elements (4) are in each case formed as a sleeve having a symmetrical external contour defining the third axis (410) of symmetry, and having a hole (43) that is eccentric with respect thereto, said hole defining the second axis (420) of symmetry.

## Revendications

1. Procédé pour aligner un guide d'ondes optique par rapport à une unité optique (1), qui est disposée dans ou contre un module optique (100), dans lequel :
- le module optique (1) comprend un axe optique (10), le long duquel une lumière est émise ou reçue par l'unité optique (1),
- le module optique (100) possède une géométrie de référence (2, 15), qui forme une structure de guidage, qui définit avec précision un premier axe de symétrie (20, 150),
- on détermine la valeur absolue et l'orientation d'un décalage entre l'axe optique (10) de l'unité optique (1) et l'axe de symétrie (20, 150) de la géométrie de référence (2, 15),
- on met à disposition un élément de couplage (4), qui sert à loger ou coupler un guide d'ondes optique destiné à être aligné par rapport à l'unité optique (1), et qui à cette fin possède un alésage(43), délimité par une surface intérieure (41), la surface intérieure (41) définissant un deuxième axe de symétrie (420),
- on met l'élément de couplage (4), par rapport au module optique, de telle sorte que le deuxième axe de symétrie (420) coïncide avec l'axe optique (10) de l'unité optique (1),dans lequel
- le premier axe de symétrie (20, 150) et le deuxième axe de symétrie (420) courent parallèlement l'un à l'autre et présentent un décalage l'un par rapport à l'autre, qui pour l'essentiel est égal au décalage entre l'axe optique (10) de l'unité optique (1) et le premier axe de symétrie (20, 150) de la géométrie de référence (2, 15),
- l'élément de couplage (4) possède une surface extérieure (41), qui définit un troisième axe de symétrie (410), lequel s'écarte du deuxième axe de symétrie, et l'élément de couplage (4) est, par rapport au module optique, disposé de telle sorte que le troisième axe de symétrie (410) se trouve sur le premier axe de symétrie (20, 150) de la géométrie de référence (2, 15), et
- l'élément de couplage (4) comporte une structure correspondant à la structure de guidage de la géométrie de référence (2, 15), de telle sorte que l'élément de couplage (4) peut pour l'essentiel être mis en place sans jeu par rapport à la géométrie de référence (2, 15),
**caractérisé en ce que**
- un tel élément de couplage (4) est choisi parmi un grand nombre d'éléments de couplage présentant des décalages différents entre le deuxième et le troisième axes de symétrie (420, 410), dans lequel le décalage entre le deuxième et le troisième axes de symétrie (420, 410) est pour l'essentiel égal au décalage entre le premier axe de symétrie (20, 150) et l'axe optique (10).

2. Procédé selon au moins l'une des revendications précédentes, **caractérisé en ce que** la géométrie de référence (2, 15) comprend un raccord cylindrique et/ou l'élément de couplage (4) comprend une douille cylindrique comportant un alésage excentré (43).

3. Procédé selon au moins l'une des revendications précédentes, **caractérisé en ce que** l'élément de couplage (4) est fixé au module optique à l'aide de la géométrie de référence (2, 15).

4. Procédé selon au moins l'une des revendications précédentes, **caractérisé en ce que** le décalage entre l'axe optique (10) de l'élément optique (1) et l'axe de symétrie (20, 150) de la géométrie de référence (2, 15) est enregistré par l'intermédiaire d'un procédé de reconnaissance d'image.

5. Montage comportant un élément de couplage et un module optique comportant une unité optique (1) et une géométrie de référence (2, 15), dans lequel
- le module optique (1) comprend un axe optique (10), le long duquel une lumière est émise ou reçue par l'unité optique (1), et
- la géométrie de référence (2, 15) forme une structure de guidage qui présente avec précision un premier axe de symétrie,
- l'axe optique (10) de l'unité optique (1) et l'axe de symétrie (20, 150) de la géométrie de référence (2, 15) présentent un décalage l'un par rapport à l'autre,
- un élément de couplage (4) est prévu, qui sert à loger ou coupler un guide d'ondes optique destiné à être optiquement couplé à l'unité optique (1),
- l'élément de couplage (4) possède un alésage (43), délimité par une surface intérieure (41), la surface intérieure (41) de l'élément de couplage (4) définissant un deuxième axe de symétrie (420), où
- l'élément de couplage (4) comporte une structure correspondant à la structure de guidage de la géométrie de référence (2, 15), de telle sorte que l'élément de couplage (4) peut pour l'essentiel mis en place sans jeu par rapport à la géométrie de référence (2, 15),
- l'élément de couplage (4) est, par rapport au module optique, disposé de telle sorte que le deuxième axe de symétrie (420) coïncide avec l'axe optique (10) de l'unité optique (1), et
- le premier axe de symétrie (20, 150) et le deuxième axe de symétrie (420) courent parallèlement l'un à l'autre et présentent un décalage l'un par rapport à l'autre, qui pour l'essentiel est égal au décalage entre l'axe optique (10) de l'unité optique (1) et le premier axe de symétrie (20, 150) de la géométrie de référence (2, 15),
**caractérisé en ce que** l'élément de couplage (4) est configuré en une seule partie.

6. Montage selon la revendication 5, **caractérisé en ce que** l'élément de couplage (4) possède une surface extérieure (41) qui définit un troisième axe de symétrie (410), qui s'écarte du deuxième axe de symétrie, et l'élément de couplage (4) est disposé par rapport à l'élément optique de telle sorte que le troisième axe de symétrie (410) se trouve sur le premier axe de symétrie (20, 150) de la géométrie de référence (2, 15).

7. Montage selon la revendication 5 ou 6, **caractérisé en ce que** l'élément de couplage (4) est formé par une douille ayant un alésage excentré (43).

8. Montage selon au moins l'une des revendications 5 à 7, **caractérisé en ce que** la douille 4 est fixée au module optique au moyen de la géométrie de référence (2, 15).

9. Montage selon au moins l'une des revendications 5 à 8, **caractérisé en ce que** l'unité optique (1) est une diode électroluminescente, une diode laser, une photodiode ou un miroir.

10. Montage selon au moins l'une des revendications 5 à 9, **caractérisé en ce que** l'unité optique (1) est configurée comme une puce.

11. Montage selon au moins l'une des revendications 5 à 10, **caractérisé en ce que** l'élément de couplage (4') présente, sur sa face opposée à l'unité optique, des structures d'encliquètement (44') destinées au couplage d'une prise optique avec un guide d'ondes optique.

12. Montage selon au moins l'une des revendications 5 à 11, **caractérisé en ce que** la géométrie de référence (2, 15) a en coupe transversale la forme d'un cercle ou d'un N-gone.

13. Kit de construction, comprenant :
- un module optique selon la revendication 5, qui comprend une unité optique (1) et une géométrie de référence (2, 15), qui forme une structure de guidage, laquelle comprend avec précision un premier axe de symétrie,
- ainsi qu'un grand nombre d'éléments de couplage (4), configurés en une pièce, où
- chaque élément de couplage du kit de construction a une surface intérieure (42), qui définit un deuxième axe de symétrie (420), et une surface extérieure (41) qui définit un troisième axe de symétrie (410), où
- le deuxième et le troisième axes de symétrie présentent l'un par rapport à l'autre un décalage parfaitement défini, ce dicalage étant different entre les éléments de couplage individuels du kit de construction, et
- les éléments de couplage (4) présentent chacune une structure correspondant à la structure de guidage de la géométrie de référence (2, 15), de telle sorte que les éléments de couplage (4) peuvent être placés pour l'essentiel sans jeu par rapport à la géométrie de référence (2, 15).

14. Kit de construction selon la revendication 13, **caractérisé en ce que** chaque élément de couplage (4) est configuré comme une douille ayant un contour extérieur symétrique qui définit le troisième axe de symétrie (410), avec un alésage (43), excentré par rapport à ce contour, et qui définit le deuxième axe de symétrie (420).
